# EUROPÄISCHE PATENTSCHRIFT

(11) **EP 2 278 591 B1**
(45) Veröffentlichungstag und Bekanntmachung des Hinweises auf die Patenterteilung: **24.12.2014**
(21) Anmeldenummer: 10169208.5
(22) Anmeldetag: 12.07.2010
(51) Int. Cl.: G21C 17/06

(54) **Verfahren und Vorrichtung zum Ermitteln der Verformung eines Brennelementes eines Druckwasserreaktors**
Method and device for determining the deformation of a fuel element of a pressurised water reactor
Procédé et dispositif d'établissement de la déformation d'un élément de combustion d'un réacteur à eau pressurisée

(30) Priorität: 20.07.2009 DE 102009027831; 21.08.2009 DE 102009028793
(43) Veröffentlichungstag der Anmeldung: 26.01.2011
(73) Patentinhaber: AREVA GmbH, 91052 Erlangen (DE)
(72) Erfinder: Hummel, Wolfgang, 92318, Neumarkt (DE); Feller, Timo, 90489, Nürnberg (DE)
(74) Vertreter: Meissner, Bolte & Partner GbR

(56) Entgegenhaltungen:
- JP-A- H09 251 091
- JP-A- H10 282 286
- US-A1- 2007 248 239

## Beschreibung

Die Erfindung bezieht sich auf ein Verfahren und eine Vorrichtung zum Ermitteln der Verformung eines Brennelementes eines Druckwasserreaktors.

Die Brennelemente eines Druckwasserreaktors können im Laufe ihres Betriebes abhängig von ihrer Position im Kern eine im wesentlichen aus einer Durchbiegung bestehende Verformung erfahren, die im ungünstigsten Fall zu einer Schwergängigkeit der Steuerstäbe oder zu Problemen beim Brennelementwechsel führen können. Bei der Inspektion von Brennelementen ist es daher erforderlich, die Verformung eines solchen Brennelementes quantitativ zu bestimmen, um über deren weitere Verwendbarkeit entscheiden zu können oder um diese, wie es beispielsweise in der WO 02/095765 A2 vorgeschlagen ist, am Rand des Kerns derart orientiert einzusetzen, dass das Maximum der Durchbiegung an der Außenseite des Kerns liegt, um auf diese Weise eine vorliegende Durchbiegung zu verringern.

Ein Verfahren zum Ermitteln der Durchbiegung eines Brennelementes ist beispielsweise aus der JP 10282286 A bekannt. Bei diesem Verfahren wird mit einer parallel zum Brennelement verfahrbaren Videokamera der Kurvenverlauf eines Brennstabes zwischen einem oberen und einem unteren Strukturelement erfasst. Aus der JP 02176506 A ist eine Vorrichtung bekannt, mit der die Abmessungen eines Brennelementes mit Hilfe einer Kamera erfasst werden, wobei zusätzlich eine Abstandsmesseinrichtung zum Einsatz gelangt, mit der der Abstand zwischen der Kamera und dem Brennelement gemessen wird, um die in Folge einer Durchbiegung variierende Größe des Bildes zu korrigieren. Ferner ist aus der JP H09251091 A ein bildbasiertes Verfahren zum Ermitteln der Verformung eines Brennelementes eines Druckwasserreaktors bekannt.

Der Erfindung liegt daher die Aufgabe zu Grunde, ein Verfahren zum Ermitteln der Verformung eines Brennelementes eines Druckwasserreaktors anzugeben, das einfach und mit geringem Zeitaufwand durchzuführen ist. Außerdem liegt der Erfindung die Aufgabe zu Grunde, eine nach diesem Verfahren arbeitende Vorrichtung anzugeben.

Hinsichtlich des Verfahrens wird die genannte Aufgabe gemäß der Erfindung gelöst mit einem Verfahren mit den Merkmalen des Patentanspruches 1. Dieses Verfahren umfasst folgende Schritte:
a) Das Brennelement wird in einer im Inneren eines gefluteten Beckens befindlichen Messstation angeordnet,
b) die Messstation umfasst eine Haltevorrichtung zum Aufnehmen und Fixieren des Brennelementes sowie eine zumindest annähernd parallel zu deren Lagerachse verfahrbare Kamera,
c) vom Brennelement werden mit der Kamera digitale Bilder in unterschiedlichen axialen Positionen aufgenommen und gespeichert, in denen sich jeweils ein im aufgenommenen Bild erkennbares Strukturelement des Brennelementes befindet, dessen Position im aufgenommenen Bild von der Verformung des Brennelementes abhängt,
d) jedes aufgenommene Bild wird mit Methoden der digitalen Bildverarbeitung zumindest ausschnittsweise segmentiert,
e) im segmentierten Bild wird durch Vergleich mit einem virtuellen Bild des zu dieser Aufnahmeposition gehörenden Strukturelementes das Strukturelement identifiziert,
f) für zumindest ein ausgewähltes Referenzelement des Strukturelements, dessen räumliche Position von der Durchbiegung des Brennelementes abhängt, wird automatisch zumindest eine Bildkoordinate ermittelt und unter Zuhilfenahme eines vorbekannten Abbildungsmaßstabes einer Objektkoordinate zugeordnet.

Durch die mit einer derartigen automatisierten photogrammetrischen Vermessung erfolgende Erfassung der Objektkoordinate eines Referenzelementes, dessen Lage im Raum (Objektkoordinate) von einer Verformung des Brennelementes abhängt und deren quantitative Bestimmung ermöglicht, beispielsweise ein Punkt oder eine vertikale Linie dessen bzw. deren Abstand zur Seitenkante bzw. Ecke des Brennelementes bekannt ist, ist der Zeitaufwand für die Ermittlung der Verformung signifikant verringert.

Strukturelement im Sinne der vorliegenden Erfindung kann dabei beispielsweise die Kontur eines Strukturteiles des Brennelementes sein, beispielsweise die Außenkontur eines Brennstabes, die Kontur eines Abstandhalters, des Fußteils oder des Kopfteils des Brennelementes, oder die Kontur einer Bohrung, eines Schlitzes oder einer Ablenkfahne in einem solchen Abstandhalter.

Der Erfindung liegt dabei die Überlegung zugrunde, dass mit einer mit Methoden der digitalen Bildverarbeitung durchgeführten unmittelbaren Detektion der sich in Längsrichtung erstreckenden seitlichen Außenkante des Abstandhalters in vielen Fällen die tatsächliche Lage dieser Außenkante (Ecke) nur ungenau ermittelt werden kann. Grund hierfür sind einerseits die ungünstigen Beleuchtungsverhältnisse, die insbesondere die Detektion der seitlichen Kante bzw. der Ecke eines Randsteges des Abstandhalters erschweren. Eine eindeutige Segmentierung der Kante ist andererseits auch deshalb erschwert, als das Brennelement nicht nur in eine Richtung verbogen sondern außerdem verdrillt sein kann, so dass im aufgenommenen Bild zwei nahe beisammen liegende Kanten bzw. Ecken abgebildet werden, die aufgrund der ungünstigen Beleuchtungsverhältnisse nicht mehr sicher voneinander getrennt werden können.

Da gemäß der vorliegenden Erfindung ein im Bild mit Hilfe seines virtuellen Bildes eindeutig identifizierbares Strukturelement segmentiert wird, in dem sich ein ausgewähltes Referenzelement befindet, das sicher lokalisiert werden kann, und dessen räumliche Position von der Durchbiegung des Brennelementes abhängt, können Strukturen im realen Bild herangezogen werden, die auch bei schlechten Beleuchtungsverhältnissen sicher automatisch detektiert werden können.

Vorzugsweise wird in jedem aufgenommenen Bild das segmentierte Strukturelement mit einem virtuellen Bild dieses Strukturelementes - die Referenzstruktur - zur Deckung gebracht wird, und es wird als das zumindest eine ausgewählte Referenzelement das virtuelle Bild des Referenzelementes zur Bestimmung der Objektkoordinate herangezogen. Mit anderen Worten: Die Messung der Position des Referenzelementes erfolgt nicht unmittelbar mit dem aufgenommenen Bild des Strukturelementes sondern anhand der virtuellen Referenzstruktur, deren Position im Bild unter Zuhilfenahme des segmentierten Strukturelementes festgelegt wird. Auf diese Weise wird die Genauigkeit der Messung verbessert.

Wenn zumindest eine Mehrzahl der in verschiedenen axialen Positionen im Bild aufgenommenen Strukturelemente untereinander baugleich ist und die ausgewählten Referenzelemente einander entsprechen wird die Vermessung zusätzlich vereinfacht und dementsprechend beschleunigt.

Wenn der Abbildungsmaßstab mit Hilfe bekannter Abmessungen von im Bild wiedergegebenen Strukturen des Brennelementes bestimmt wird, sind Fehler, die durch Toleranzen der Position der Kamera oder der Position des Brennelementes in der Haltevorrichtung verursacht sind, weitgehend eliminiert.

Hinsichtlich der Vorrichtung wird die genannte Aufgabe gelöst mit einer Vorrichtung mit den Merkmalen des Patentanspruches 5, deren Vorteile sinngemäß den zu den Verfahrensansprüchen jeweils angegebenen Vorteilen entsprechen.

Zur weiteren Erläuterung der Erfindung wird auf das Ausführungsbeispiel der Zeichnung verwiesen. Es zeigen:
- Fig. 1: eine Vorrichtung gemäß der Erfindung in einer schematischen Prinzipdarstellung,
- Fig. 2 und 3: jeweils mit der Kamera aufgenommene Bilder eines Brennelementes im Bereich eines Abstandhalters bzw. im Bereich seines Fußteils,
- Fig. 4: eine schematische idealisierte Darstellung der durch Drehung des Brennelementes in der Messstation möglichen Messpositionen der Kamera.

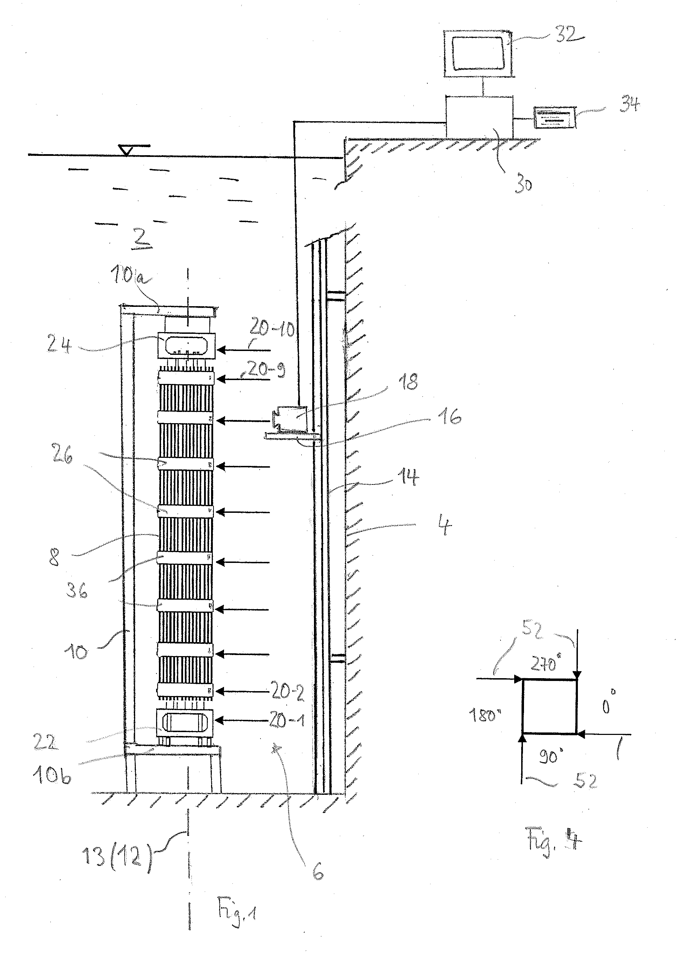

Gemäß Fig. 1 ist in einem mit Wasser 2 gefluteten Becken 4 einer Druckwasser-Kernreaktoranlage, beispielsweise das Brennelementlagerbecken, eine Messstation 6 zum Vermessen der Verformung eines Brennelementes 8 angeordnet. Die Messstation 6 umfasst eine Haltevorrichtung 10 mit einer oberen und einer unteren Aufnahme 10a bzw. 10b, zwischen denen das Brennelement 8 in einer Position aufgenommen und fixiert ist, in der dessen Längsachse 12 im Idealfall, d.h. bei nicht durchgebogenem Brennelement 8, parallel zu einer zumindest annähernd vertikal ausgerichteten Lagerachse 13 der Haltevorrichtung 10 ausgerichtet ist.

Zumindest annähernd parallel zur Lagerachse 13 der Haltevorrichtung 10, d.h. ebenfalls zumindest annähernd vertikal ausgerichtet, ist an einer Seitenwand des Beckens 4 eine Schiene 14 angeordnet, auf der ein Schlitten 16 aufgegleist ist, der eine Kamera 18 trägt. Mit Hilfe dieses Schlittens 16 kann die Kamera 18 entlang der Schiene 14 verfahren und gegenüber dem Brennelement 8 in unterschiedlichen axialen (Höhen-)Positionen positioniert werden, wie dies in der Fig. durch die mit Pfeilen dargestellten Positionen 20-1 bis 20-10 veranschaulicht ist.

Brennelement 8 und Kamera 18 sind relativ zueinander derart positioniert, dass deren optische Achse zumindest annähernd senkrecht zu einer ihr zugewandten Seitenfläche eines nicht durchgebogenen und nicht verdrillten Brennelementes 8 verläuft, um ein von perspektivischen Verzerrungen weitgehend freies Bild in Draufsicht auf das Brennelement 8 zu erzeugen. Grundsätzlich ist es aber auch möglich durch nicht exakt senkrechte Ausrichtung auftretende Verzerrungen mit einer Bildverarbeitungssoftware rechnerisch durch die Aufnahme eines Objektes mit einer auf ihm befindlichen geraden Linie zu eliminieren.

Die Kamera 18 wird nacheinander in die unterschiedlichen Positionen 20-1 bis 20-10 gefahren. Im dargestellten Beispiel werden mit der Kamera 18 eine Position 20-1 im Bereich des Fußteils 22 und eine Position 20-10 im Bereich des Kopfteils 24 sowie Positionen 20-2 bis 20-9 im Bereich der Abstandhalter 26 des Brennelementes 8 angefahren.

Die von der Kamera 18 in diesen Positionen 20-1 bis 20-10 aufgenommenen Bilder werden in einem an eine Steuer- und Auswerteeinheit 30 angeschlossenen Monitor 32 wiedergegeben und in einem Bildspeicher gespeichert. Die Steuer-und Auswerteeinheit 30 umfasst eine in ihr in Form einer Software implementierte Bildverarbeitungseinheit, deren Funktionsweise nachfolgend näher erläutert wird. In der Fig. ist außerdem eine Eingabeeinheit 34, beispielsweise eine Tastatur und eine Maus, zum manuellen Eingeben von Steuerbefehlen dargestellt.

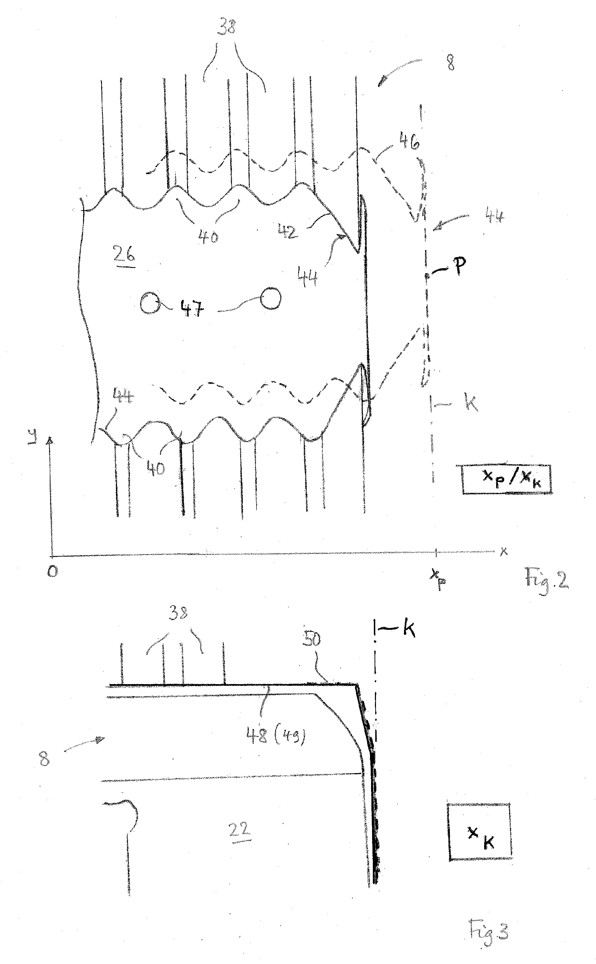

Fig. 2 zeigt nun ein von der Kamera 18 aufgenommenes digitales Bild des Brennelementes 8 im Bereich eines seiner Abstandhalter 26. In der Fig. ist zu erkennen, dass der Abstandhalter 26 an seiner Ober- und Unterkante in das Innere des Brennelementes 8 weisende und zwischen die Brennstäbe hineinragende Fahnen 40 aufweist, die zum einen dazu dienen, das bei Betrieb im Inneren des Brennelementes 8 strömende Kühlwasser abzulenken und andererseits die Funktion haben, ein Verhaken der Brennelemente 8 beim Be- und Entladen zu verhindern. In der Fig. ist außerdem ein Bildkoordinatensystem x,y eingetragen, das beispielsweise in Form eines Maßstabes für den Betrachter im Monitor sichtbar ist, und das bei bekanntem Abbildungsmaßstab anstelle von Pixelwerten unmittelbar reale Objektkoordinaten in metrischen Einheiten wiedergibt.

Das aufgenommene Bild wird nun mit Methoden der digitalen Bildverarbeitung mit einer in der Steuer- und Auswerteeinheit 30 implementierten Software segmentiert, um die Identifikation eines ausgewählten Strukturelementes zu ermöglichen, dessen Position im Bild von der Verformung des Brennelementes 8 abhängt. Im Beispiel ist dies das Bild 42 der Kontur 44 des im aufgenommenen Bild wiedergegebenen Abstandhalters 26.

In der Fig. ist außerdem gestrichelt ein virtuelles Bild 46 der Kontur 44 des im Brennelement 8 in der axialen Position, in der sich die Kamera 18 befindet, eingebauten Abstandhalters 26 eingezeichnet. Dieses virtuelle Bild 46 dient als Referenzstruktur und ist in einem Bildspeicher der in Fig. 1 dargestellten Steuer- und Auswerteeinheit 30 für den jeweils betreffenden Brennelement- bzw. Abstandhaltertyp gespeichert. Durch Vergleich der im aufgenommenen Bild segmentierten Strukturen mit dem virtuellen Bild 46 wird das für die Auswertung benötigte Strukturelement, d.h. im Beispiel das aufgenommene Bild 42 der Kontur 44 identifiziert. Mit anderen Worten: Im dargestellten Beispiel dient die Kontur 44 des Abstandhalters 26 als identifizierbares Strukturelement.

Für den Fall, dass ein Brennelement 8 vermessen werden soll, von dem ein virtuelles Bild eines für die Messung geeigneten Strukturelementes nicht vorliegt, ist es möglich, im Rahmen einer Referenzierung vor Ort ein solches virtuelles Bild zu erzeugen, indem ein Strukturelement ausgewählt wird und beispielsweise mit Hilfe eines Mauszeigers manuell nachgefahren wird. Auf diese Weise wird im aufgenommenen Bild ein als Referenzstruktur vorgesehenes Strukturelement lokalisiert. In der unmittelbaren Umgebung der vom Mauszeiger abgefahrenen Linie wird nun eine Segmentierung durchgeführt. Die bei der Segmentierung ermittelte Kontur des Strukturelementes, beispielsweise ebenfalls die Kontur des Abstandhalters, wird als virtuelles Bild gespeichert und als Referenzstruktur für die folgenden Messungen verwendet.

Das virtuelle Bild 46 wird nun mit dem realen Bild 42 überlagert, d.h. reales und virtuelles Bild 42 bzw. 46 werden so lange relativ zueinander verschoben bis die geometrische Abweichung zwischen realem und virtuellem Bild 42 bzw. 46 minimal ist.

Im virtuellen Bild 46 ist nun als Referenzelement, dessen räumliche Position von der Durchbiegung des Brennelementes 8 abhängt, ein Punkt P auf der seitlichen Außenlinie K des virtuellen Bildes 46 definiert, dessen Bildposition x_{P} in Richtung der x-Achse des Bildkoordinatensystems automatisch ermittelt und am Monitor in Pixeleinheiten oder in objektbezogenen metrischen Einheiten angezeigt wird. Grundsätzlich können auch anstelle eines einzigen Punktes mehrere Punkte erfasst werden. Als Referenzelement ist alternativ die Außenlinie K geeignet, deren horizontale Position x_{K} ebenfalls unmittelbar der tatsächlichen Lage der Seitenkanten des Brennelementes 8 entspricht.

Bei dieser Überlagerung kann es außerdem erforderlich sein, das virtuelle Bild 46 zu vergrößern oder zu verkleinern, und auf diese Weise den tatsächlichen Abbildungsmaßstab der Kamera zu ermitteln bzw. zu korrigieren und reales Bild 42 und virtuelles Bild weitgehend zur Deckung zu bringen.

Die anschließend ermittelte Bildkoordinate x_{P} für den Punkt P gibt unmittelbar die reale Position einer Außenkante des Brennelementes 8 wieder.

In der Fig. 2 sind außerdem beispielhaft im realen Bild des Abstandhalters 26 erkennbare weitere Strukturelemente in Form von Bohrungen 47 eingezeichnet, mit denen ebenfalls der Abbildungsmaßstab der Abbildung, d. h. das Verhältnis von Pixeldistanzen zu realen Ortsabständen zu Kontrollzwecken oder für den Fall, dass er nicht a priori bekannt ist, gemessen werden kann, wenn deren Abmessungen und gegenseitiger Abstand bekannt ist.

Darüber hinaus können auch derartige gut erkennbare bzw. eindeutig segmentierbare Strukturelemente in Form eines virtuellen Bildes gespeichert sein und zur Erkennung der räumlichen Lage des Abstandhalters 26 und damit der Lage der Seitenkante herangezogen werden, wenn mit diesen ein Referenzelement festgelegt werden kann, dessen Abstand zur Seitenkante bekannt ist.

In gleicher Weise können die Positionen der Außenkanten des Kopfteils und des Fußteils des Brennelementes vermessen werden, wie dies in Fig. 3 für das Fußteil 22 veranschaulicht ist. Auch hier dient eine Kontur 48 des Fußteils 22 als identifizierbares Strukturelement, dessen reales Bild 49 mit einem gestrichelt eingezeichneten virtuellen Bild 50 der Kontur 48 überlagert, d.h. zur Deckung gebracht wird, wie dies in der Fig. veranschaulicht ist. Als ausgewähltes Referenzelement dient auch in diesem Fall eine die Lage der Außenkante repräsentierende vertikale Linie K des virtuellen Bildes 50.

Alternativ hierzu ist es im Bereich von Kopf- und Fußteil ausreichend, die Lage der Außenkante unmittelbar durch Segmentierung des Bildes zu erfassen, ohne dass es hierzu eines virtuellen Bildes seiner Kontur bedarf, da es sich in der Praxis herausgestellt hat, dass deren Außenkanten eindeutiger zu identifizieren sind als die Außenkanten von Abstandhaltern.

Wenn in allen Positionen 20-1 bis 20-10 die Ortskoordinate xₚ, x_{K} der gleichen Referenzstruktur P,K ermittelt wird, braucht deren Abstand zur Außenkante des Brennelementes 8 grundsätzlich nicht bekannt zu sein, da in diesem Fall eine Kenntnis der Relativpositionen ausreicht, um eine Durchbiegung des Brennelementes 8 quantitativ zu erfassen.

Nach erfolgter Messung in allen Positionen 20-1 bis 20-10 wird das Brennelement 8 um 90° gedreht und erneut vermessen, so dass das Brennelement 8 von allen vier Seiten auf das Auftreten einer Verformung untersucht wird, wie dies in Fig. 4 durch Pfeile veranschaulicht ist. Da alle vier Seitenkanten bzw. Ecken des Brennelementes vermessen werden, können systembedingte Fehlerquellen, beispielsweise Abweichung der Lagerachse von der Vertikalen, keine exakte Parallelität der Schiene und der Lagerachse, Lagerachse und Längsachse des (nicht durchgebogenen) Brennelementes fallen nicht zusammen, Kamera fährt nicht exakt auf einer geradlinigen Bahn, rechnerisch eliminiert werden und es können nicht nur die Richtung der Durchbiegung erfasst sondern zusätzlich auch eine Verdrillung des Brennelementes 8 um seine Längsachse gemessen werden.

Im dargestellten Ausführungsbeispiel sind als ausgewählte Struktur- bzw. Referenzelemente konstruktive Bestandteile von Abstandhaltern verwendet worden. Grundsätzlich können aber als Strukturelemente auch Brennstäbe in besonderen Positionen, beispielsweise die im Bereich einer Ecke angeordneten Brennstäbe, herangezogen werden.

## Patentansprüche

1. Verfahren zum Ermitteln der Verformung eines Brennelementes (8) eines Druckwasserreaktors, umfassend folgende Schritte:
a) Das Brennelement (8) wird in einer im Inneren eines gefluteten Beckens (4) befindlichen Messstation (6) angeordnet,
b) die Messstation (6) umfasst eine Haltevorrichtung (10) zum Aufnehmen und Fixieren des Brennelementes (8) sowie eine zumindest annähernd parallel zu deren Lagerachse (13) verfahrbare Kamera (18),
c) vom Brennelement (8) werden mit der Kamera (18) digitale Bilder (42, 49) in unterschiedlichen axialen Positionen aufgenommen und gespeichert, in denen sich jeweils ein im aufgenommenen Bild (42, 49) erkennbares Strukturelement des Brennelementes (8) befindet, dessen Position im aufgenommenen Bild (42, 49) von der Verformung des Brennelementes (8) abhängt,
d) jedes aufgenommene Bild (42, 49) wird mit Methoden der digitalen Bildverarbeitung zumindest ausschnittweise segmentiert,
e) im segmentierten Bild wird durch Vergleich mit einem virtuellen Bild (46, 50) des zu dieser Aufnahmeposition gehörenden Strukturelementes das Strukturelement identifiziert,
f) für zumindest ein ausgewähltes Referenzelement des Strukturelements, dessen räumliche Position von der Verformung des Brennelementes (8) abhängt, wird automatisch zumindest eine Bildkoordinate ermittelt und unter Zuhilfenahme eines vorbekannten Abbildungsmaßstabes einer Objektkoordinate zugeordnet.

2. Verfahren nach Anspruch 1, bei dem in jedem aufgenommenen Bild (42, 49) das segmentierte Strukturelement mit einem virtuellen Bild (46, 50) dieses Strukturelementes zur Deckung gebracht wird, und das zumindest eine ausgewählte Referenzelement anhand einer virtuellen Referenzstruktur, deren Position im Bild unter Zuhilfenahme des segmentierten Strukturelements festgelegt wird, zur Bestimmung der Objektkoordinate herangezogen wird.

3. Verfahren nach Anspruch 1 oder 2, bei dem zumindest eine Mehrzahl der in verschiedenen axialen Positionen im Bild aufgenommenen Strukturelemente untereinander baugleich ist und die ausgewählten Referenzelemente einander entsprechen.

4. Verfahren nach einem der Ansprüche 1, 2 oder 3, bei dem der Abbildungsmaßstab mit Hilfe bekannter Abmessungen von im Bild wiedergegebenen Strukturen des Brennelementes (8) bestimmt wird.

5. Vorrichtung zum Ermitteln der Verformung eines Brennelementes (8) eines Druckwasserreaktors, mit
a) einer in das Innere eines gefluteten Beckens (4) einbringbaren Messstation (6) mit einer Haltevorrichtung (10) zum Aufnehmen und Fixieren des Brennelementes (8),
b) einer neben der Haltevorrichtung (10) zumindest annähernd parallel zu deren Lagerachse (13) angeordneten Schiene (14), auf der ein Schlitten (16) verfahrbar aufgegleist ist, der eine Kamera (18) zum Aufnehmen von digitalen Bildern (42, 49) des Brennelementes (8) trägt, und
c) einem Monitor (32) zur Wiedergabe der realen Bilder (42, 49); **gekennzeichnet durch**
d) eine Steuer- und Auswerteeinheit (30) mit einer darin implementierten Software zum Durchführen eines Verfahrens nach einem der Ansprüche 1 bis 4.

## Claims

1. Method for determining the deformation of a fuel element (8) of a pressurised water reactor, comprising the following steps:
a) the fuel element (8) is arranged in a measuring station (6) located in the interior of a flooded tank (4),
b) the measuring station (6) comprises a holding device (10) for receiving and fixing the fuel element (8), as well as a camera (18) that can be moved at least approximately parallel to its bearing axis (13),
c) digital images (42, 49) of the fuel element (8) are recorded and saved in different axial positions by the camera (18), in which a respective structural element of the fuel element (8), which can be detected in the recorded image (42, 49), is located, the position of said structural element in the recorded image (42, 49) depending on the deformation of the fuel element (8),
d) each received image (42, 49) is segmented, at least in sections, using digital image processing methods,
e) in the segmented image, the structural element is identified by a comparison with a virtual image (46, 50) of the structural element belonging to this recording position,
f) for at least one selected reference element of the structural element, the spatial position of which depends on the deformation of the fuel element (8), at least one image coordinate is determined automatically and allocated to an object coordinate with the aid of a previously known image scale.

2. Method according to claim 1, wherein, in each recorded image (42, 49), the segmented structural element is covered with a virtual image (46, 50) of this structural element, and the at least one selected reference element is, with the aid of a virtual reference structure whose position in the image is determined by means of the segment structural element, used to determine the object coordinate.

3. Method according to claim 1 or 2, wherein at least one plurality of the structural elements recorded in different axial positions in the image is structurally identical and the selected reference elements correspond to one another.

4. Method according to one of claims 1, 2 or 3, wherein the image scale is determined with the aid of known dimensions of structures of the fuel element (8) that are reproduced in the image.

5. Device for determining the deformation of a fuel element (8) of a pressurised water reactor, having
a) a measuring station (6) that can be introduced into the interior of a flooded tank (4), having a holding device (10) for receiving and fixing the fuel element (8),
b) a rail (14) arranged alongside the holding device (10) at least approximately parallel to its longitudinal axis (13), on which rail a slot (16) is moveably re-railed, said slot bearing a camera (18) for recording digital images (42, 49) of the fuel element (8), and
c) a monitor (32) for reproducing the real images (42, 49); **characterised by**
d) a control and evaluation unit (30) having a piece of software implemented therein for carrying out a method according to one of claims 1 to 4.

## Revendications

1. Procédé pour déterminer la déformation d'un assemblage combustible (8) d'un réacteur nucléaire à eau sous pression, comprenant les étapes suivantes :
a) L'assemblage combustible (8) est disposé dans une station de mesure (6) se trouvant à l'intérieur d'une piscine (4) noyée,
b) la station de mesure (6) comporte un dispositif de maintien (10) pour loger et immobiliser l'assemblage combustible (8) et une caméra (18) pouvant être déplacée au moins de façon sensiblement parallèle à son axe de positionnement (13),
c) la caméra (18) prend et enregistre des images numériques (42, 49) de l'assemblage combustible (8) dans différentes positions axiales dans chacune desquelles se trouve un élément structurel de l'assemblage combustible (8) visible sur l'image prise (42, 49), élément structurel dont la position dépend de la déformation de l'assemblage combustible (8),
d) chaque image prise (42, 49) est segmentée au moins en partie avec des méthodes de traitement numérique de l'image,
e) sur les images segmentées (42, 49), on identifie l'élément structurel en le comparant avec une image virtuelle (46, 50) de l'élément structurel correspondant à cette position photographiée,
f) pour au moins un élément de référence sélectionné de l'élément structurel, dont la position dans l'espace dépend de la déformation de l'assemblage combustible (8), on détermine automatiquement au moins une coordonnée d'image qui est affectée à une coordonnée de l'objet à l'aide d'une échelle de reproduction déjà connue.

2. Procédé selon la revendication 1, dans lequel, sur chaque image prise (42, 49), on fait se chevaucher l'élément structurel segmenté avec une image virtuelle (46, 50) de cet élément structurel, et on utilise au moins un élément de référence sélectionné à l'aide d'une structure de référence virtuelle, dont la position sur l'image est fixée à l'aide de l'élément structurel segmenté, pour déterminer la coordonnée de l'objet.

3. Procédé selon la revendication 1 ou la revendication 2, dans lequel au moins une majorité des éléments structurels photographiés dans différentes positions axiales sont identiques entre eux et les éléments de référence sélectionnés se correspondent entre eux.

4. Procédé selon l'une quelconque des revendications 1, 2 ou 3, dans lequel l'échelle de reproduction est déterminée à l'aide de mesures connues des structures de l'assemblage combustible (8) reproduites sur l'image.

5. Dispositif pour déterminer la déformation d'un assemblage combustible (8) d'un réacteur hydraulique, avec
a) une station de mesure (6), pouvant être introduite à l'intérieur d'une piscine (4) noyée, avec un dispositif de maintien (10) prévu pour loger et immobiliser l'assemblage combustible (8),
b) un rail (14), disposé à côté du dispositif de maintien (10) de façon au moins sensiblement parallèle à l'axe de positionnement (13) de celui-ci, rail sur lequel se déplace un chariot (16) qui porte une caméra (18) prévue pour prendre des images numériques (42, 49) de l'assemblage combustible (8) Z et Z,
c) un moniteur (32) pour reproduire les images réelles (42, Z 49) ;
**caractérisé par** Z,
d) Z un Z
module de commande et d'analyse (30) intégrant un logiciel implémenté pour réaliser un procédé selon l'une quelconque des revendications 1 à 4.
